# EUROPEAN PATENT SPECIFICATION

(11) **EP 2 330 435 B1**
(45) Date of publication and mention of the grant of the patent: **16.09.2015**
(21) Application number: 10398007.4
(22) Date of filing: 19.10.2010
(51) Int. Cl.: G01S 13/90, G01C 15/00

(54) **Method to generate airport obstruction charts based on a data fusion between interferometric data using synthetic aperture radars positioned on spaceborne platforms and other types of data acquired by remote sensors**
Verfahren zur Erzeugung von Flugplatzhinderniskarten (AOC), basierend auf der Fusion von Daten satellitengestützten interferometrischen SAR und weiterer Daten von Fernsensoren
Méthode pour la génération de cartes d'obstacles d'aéroport basé sur une fusion de données entre des données interférométriques des radars à synthèse d'ouverture positionnés sur des plateformes spatiales et d'autres types de données captées par des détecteurs à distance

(30) Priority: 23.10.2009 PT 10479809
(43) Date of publication of application: 08.06.2011
(73) Proprietor: Ana-Aeroportos de Portugal, S.A., 1700-008 Lisboa (PT)
(72) Inventor: Fernandes Rodrigues, Marco Alexandre, 2860-479 Moita (PT); Monteiro Oliveira, Henrique José, 2745-834 Queluz (PT)
(74) Representative: Pereira da Cruz, Joao

(56) References cited:
- US-A1- 2007 255 729
- DUBET S ED - INSTITUTE OF ELECTRICAL AND ELECTRONICS ENGINEERS: "Terrain, obstacle and airport databases for electronic flight bags", 22ND. DASC. THE 22ND. DIGITAL AVIONICS SYSTEMS CONFERENCE PROCEEDINGS. INDIANAPOLIS, IN, OCT. 12 - 16, 2003; [DIGITAL AVIONICS SYSTEMS CONFERENCE], NEW YORK, NY : IEEE, US, vol. 2, 12 October 2003 (2003-10-12), pages 13_D_2_1-13_D_2_11, XP010669025, ISBN: 978-0-7803-7844-5
- ICAO: "Guidelines for Electronic Terrain, Obstacle and Aerodrome Mapping Information", 20071129, [Online] no. 9881, 29 November 2007 (2007-11-29), pages 1-345, XP007918437, Retrieved from the Internet: URL:http://www2.icao.int/en/pbn/ICAO%20Doc umentation/ICAO%20Documentation /Guidelines%20for%20Electronic%20Terrain,% 20Obstacle%20and%20Aerodrom e%20Mapping%20Information.pdf>
- SCHIEFELE J ET AL: "A worldwide SRTM terrain database suitable for aviation use", PROCEEDINGS OF THE SPIE, SPIE, BELLINGHAM, VA, US, vol. 6226, 19 May 2006 (2006-05-19), pages 622604-1, XP007918436, ISSN: 0277-786X, DOI: DOI:10.1117/12.664898
- N. ZIMMER, J. SCHIEFELE, W. LUGSCH, D. RAVENSCROFT: "Aviation obstacle auto-extraction using remote sensing information", SPIE, PO BOX 10 BELLINGHAM WA 98227-0010 USA, vol. 7110, 15 September 2008 (2008-09-15), XP040443558, DOI: 10.1117/12.79979
- ZELLERS S: "Description of a database server architecture for synthetic vision system applications", DIGITAL AVIONICS SYSTEMS CONFERENCES, 2000. PROCEEDINGS. DASC. THE 19T H 7-13 OCTOBER 2000, PISCATAWAY, NJ, USA,IEEE, vol. 1, 7 October 2000 (2000-10-07), pages 2.C.2_1-2.C.2_6, XP010525330, ISBN: 978-0-7803-6395-3
- SCHIEFELE J ET AL: "Safety relevant navigation and certifiable databases for 3D synthetic vision systems", DIGITAL AVIONICS SYSTEMS CONFERENCE, 1998. PROCEEDINGS., 17TH DASC. THE AIAA/IEEE/SAE BELLEVUE, WA, USA 31 OCT.-7 NOV. 1998, NEW YORK, NY, USA,IEEE, US, vol. 2, 31 October 1998 (1998-10-31), pages J21/1-J21/8, XP010318185, DOI: DOI:10.1109/DASC.1998.739886 ISBN: 978-0-7803-5086-1

## Description

### Field of the invention

The need of accurate tridimensional geographic information data by the authorities for the management of aeronautical infrastructures and related to the standard Aerodromes coverage Areas, stated in Aeronautical International Standards and Recommended Practices by the International Civil Aviation Organization (ICAO), has been one of the major requirements of the aeronautical safety management community.
The current proposal addresses the safety issue related with the obstructions (notably its locations and heights), positioned in the surroundings of the aeronautical infrastructures (airports and other aerodromes), which need to be declared in Airport Obstruction Charts (AOC) and Precision Approach Terrain Charts (PATC), fulfilling the requirements stated in ICAO's Annex 4, Annex 14 and Annex 15.
These charts are managed by civil aviation authorities or the authority for the management of Aerodromes. Its designing and technical specifications are regulated worldwide by ICAO and in Portugal by INAC (the Portuguese civil aviation authority).
Nowadays, a fast update procedure of airport obstruction charts is required due to the increase in safety restrictions related to the aviation transport market. Most of the studies related to obstacles are conducted along several years apart, between the moment of the production of a Precision Approach Terrain Charts (PATC) or Airport Obstruction Charts (AOC) and the time of its update. Usually a one year window or more is obtained between the two previous moments in time, even using the actual state-of-the-art technology, the Airborne Laser-Scanning and Light Detection and Ranging (ALS/LiDAR), regarding a regular obstruction data structure acquired over a small surveyed area. This makes data often becoming obsolete when the data structure is finished, and also without fulfilling the deadlines stated in ICAO's Annex 15, Chapter 10, paragraph 10.6, regarding the availability of terrain and obstacle data for large and very large surveyed areas.

### State-of-the-art

A trade-off analysis between airborne LiDAR, the state-of-the-art *technology* so far used in the scope of this type of application, and spaceborne Synthetic Aperture Radar platforms, shows that the flight altitude of the aircraft is obviously much lower than satellites, therefore, the data acquisition method of airborne LiDAR generally add several inconveniencies which are frequently or systematically associated to the data acquisition procedure:
- Severe restrictions in airfield operations during LiDAR flights for data acquisition, generating highly dangerous operations due to low flight altitudes needed;
- Huge delays in flight departs and arrivals procedures specially in high traffic airports also due to the necessary suspension of the airfield operations;
- In some cases the LiDAR data acquisition is restricted to daytime flight.

The time spent to process airborne LiDAR data is huge (generally more than six months for a very small, to almost two years or more for a medium to large surveyed standard areas), requiring the analysis of billions of points even for small coverage areas and correcting all of them from displacements errors, because it is a point based application in a tridimensional environment, being necessary to do a spatial rectification procedure between all the acquired points, regarding errors associated to the flight path of the airplane, and also to execute another rectification procedure now between different strips of points acquired during different epochs for the same monitored area. Although the processing of acquiring airborne LiDAR data is made by using advanced digital equipment, it is done almost point by point and it is slow due to the processing of a huge amount of data, highlighting another drawback related with the use of this type of remote sensor, i.e. it leads to high costs of data production. In Saksono T. et al., "The future of maps of Indonesia: "Benefit of leading edge radar interferometry technology", in Map Asia 2003, Technology Trends, 2003, limitations related to computational efforts made are referred, implying the processing being made in Oytawa (EUA) for data coming from a project in Indonesia.

Data acquired from spaceborne platforms does not require specialized hardware for the technical processing, since its core domain is based on a grid structure (raster model) instead of a point based one. So, the intention behind the use of a raster based model is to guarantee that for each pixel, which represents a small covered area, we have its digital number (which is its height in the current focus domain) equal to the highest object in that pixel area. It is stated in the scientific community that the survey of large or very large coverage areas, for example the entire territory of a State, is unfeasible when airborne LiDAR technology is used, while the spaceborne sensors represent an adequate alternative and there are also a low cost solution, i.e. spaceborne remote sensors present a low cost solution regarding the data acquisition procedure.

The ALS/LiDAR data acquisition systems are near vertical remote sensing units. The spaceborne Synthetic Aperture Radar platforms are side-scan systems, presenting themselves as an advantage for this specific type of application - obstacle data for Aeronautical purpose. As an example, any small area objects with great height development, like a 30 meters height antenna, represented in a LiDAR derived DSM, reveal a very small detected area, while a much larger one is obtained for the same scanned object when a side-scan RADAR system is in use, due to its slant range sensing characteristic.

Additionally, the bandwidth of the energy used in the LiDAR remote sensing technology is usually small (usually Near Infra-Red), which is severely affected by atmospherical conditions, inducing undetectable errors in the height data, in the opposite of Spaceborne SAR technology since it can operate in all weather conditions, whether its day or night time.

The accuracy of LiDAR data varies along the studied area due to frequently changes of flight altitude of the aircraft. Moreover, the inertial GPS systems attached to the aircrafts used for carrying the hardware of LiDAR systems have some difficulty to account accurately for errors originated by aircraft movements along its longitudinal axis (usually referred as roll induced errors), when comparing to those derived from Space Vehicles. Adding the variability of the returned signals, due to humidity and small particles in suspension in the atmosphere (aerosols), the airborne LiDAR system accuracy is described in terms of radiometric accuracy, instead of true altitude accuracy.

Some methods to generate airport obstruction charts are known. Thus:
In Garrity C., "Digital Cartographic Production Techniques Using Airborne Interferometric Synthetic Aperture Radar (IFSAR), North Slop Alaska, 2005 and Saksono T. et al., "The future of maps of Indonesia: "Benefit of leading edge radar interferometry technology", in Map Asia 2003, Technology Trends, 2003, the principles of the SAR technique are described, based on the description made by the scientific community since the eighties, where a work made by INTERMAP is presented regarding the implementation of a service to acquire data to produce a Digital Surface Model (DSM) and a Digital Terrain Model (DTM), but with difficult application to aeronautical purposes. Though the service was implemented in 2003, in 2010 the temporal resolution of the data obtained using the technique described in the paper is not efficient in terms of the cost/benefit ratio, due to the fact that none data update procedure was executed along one year or less at reasonable costs. In Garrity C.,"Digital Cartographic Production Using Airborne Interferometric Synthetic Aperture Radar (IFSAR)", North Slopem Alaska, 2005, the data acquisition recurring to SAR sensors is mentioned, revealing also a good spatial resolution, but it will be practically unfeasible to collect information for the entire territory of a state during a reasonable temporal window if the acquired data will be used for aeronautical purposes, because the paper refers the use of Synthetic Aperture Radars positioned in airborne platforms (IFSAR - Airborne Interferometric Synthetic Aperture Radar). Moreover, the approach presented in the paper is not adequate for application to aeronautical purposes, since the numerical requirements required by ICAO's Annex 15, Chapter 10, are not fulfilled, and also the temporal resolution of the acquired data is not adequate, since data update procedure is scheduled only for 5 years, which is difficult to compare with the surveys provided by some already existents spaceborne SAR sensors like TERRASAR-X or RADARSAT, or even those future systems like the SENTINEL. Meanwhile, a short reference is made in the same paper to the use of Lansat 7 and AVHRR data, but for the case of the proposed invention the main goal is to detect altimetric changes related to the existence of new obstacles, instead of building a Digital Surface Model (DSM) of the entire area being monitored.

In Alves et al., "Fundamentos do processamento interferométrico de dados de radar de abertura sintética ", in Anais XIV Simpósio Brasileiro de Sensoriamento Remoto, Natal, Brasil, INPE, p.7227-7234, 2009 the mathematical principles of Synthetic Aperture Radars are described and although the use in the field of deformations is mentioned, the main goal here is not related with the technique used to process the images coming from Synthetic Aperture Radars since those techniques already exist, but only the processing of the data captured by Synthetic Aperture Radars positioned in spaceborne platforms and its fusion with other type of data remotely acquired is under the scope of the proposed invention, capable of producing and updating Airport Obstruction Charts in a short period of time, which is not possible to overcome using the techniques presented in all the previous references, based on the use of Synthetic Aperture Radars positioned in airborne sensors.

With the proposed invention, it is not necessary to stop or suspend the airfield operations, which is considered as one of the major advantages, apart from others, when compared to the use of Airborne Laser-Scanning and Light Detection and Ranging (ALS/LiDAR sensors, being the current state-of-the-art technology. The implementation of an automatic process to analyze georeferenced data in a Geographic Information System (GIS) environment to update and supply the AOC's efficiently in the second stage is also another technical advantage of the proposed invention. At this stage, stereoscopy imagery from PRISM-ALOS (Panchromatic Remote-sensing Instrument for Stereo Mapping - Advanced Land Observing Satellite) or SPOT-5 (multi-pass) can also be integrated together with the DSM's generated using spaceborne SAR Interferometric, for confidence level enhancement of the Obstruction Objects declared in the resulting charts.

Besides the issues related to data capturing procedures and the production of Airport Obstruction Charts, the tool created for managing the data structure developed under the scope of this invention will be able to assist managing personnel at any airport, in other activities, notably: planning, zoning, and even licensing of man-made objects, in which all the mentioned activities are based only on the ICAO's Annexes 4, 14 and 15.

Space-borne sensors trajectories are far more "stable" than an aircraft flight path due to its distance to the ground, and its data acquisition can be regarded almost as instantaneous for a very extensive area, normally comprising the whole area analyzed for any given airport in one single image or the entire territory of a State as stated in ICAO's Annex 15 Chapter 10, - eTOD, Electronic Terrain and Obstacle Data. This fact envisages that any errors presented into the data (image) are homogeneously distributed at each slant range line scan, representing a great advantage when image geometric correction procedures are executed. As for LiDAR, most of the times several "strips" or "clouds" of points are acquired in different days during weeks for the entire surveyed area, and this fact can introduce severe geometric errors between those sets of points, being very difficult to account for.

All of the previous limitations regarding the actual state-of-the-art technology used under the scope of the proposed invention, enhances the advantages of the proposed process, which is based on the use of spaceborne Synthetic Aperture Radar interferometry technology to acquire terrain and obstacle data for aeronautical purposes in strictly accordance with ICAO's Annex 4, Annex 14, Annex 15, i.e. the development of a low cost procedure and a fast achievement of an obstruction data structure.

With the same amount of money used to update an AOC with LiDAR once a year, a frequently more reliable update of tridimensional georeferenced information data in standard surveyed areas around Aerodromes can be made with the invention, even almost on-demand, several times a year, or according to the periodicity decided by the managing personnel of any aerodrome infrastructure, without actually affecting the airfield operations. If airfield operations need to be stopped during the data acquisition process for a given amount of time, then high costs will be indirectly associated with the use of the current state-of-the art technology, i.e. airborne LiDAR remote sensing systems.

Another innovative aspect that clashes unquestionably when comparing the proposed invention with the current state-of-the-art technology is the fact that a weekly update of the obstacle data can be made if necessary, which is a topic that should overcome the vertical accuracy issue for the most demanding surveyed areas, in terms of terrain obstacle data numerical requirements. ICAO recommends that obstacle data should declare "permanent" or "temporary" obstacles within the given surrounding areas of aerodromes (the most demanding ones as previously referred) and for example, a crane placed in a construction site for a single day in the surroundings of an airport, it might be declared in an Airport Obstruction Chart for years, until another LiDAR campaign for updating data is scheduled. The proposed invention has a much better connection between reality and the declared obstacles due to its higher update rate, because the temporal resolution of the acquired data is enhanced when a spaceborne SAR Interferometry remote sensing system is used.

### Summary

The invention refers an innovative process based on the existence of a Digital Surface Model (DSM) - in terms of its altimetric precision and spatial resolution - corresponding to the first reflective surface , i.e. top of the buildings, top of telecommunications antennas, top of the bridges, etc., build using spaceborne Synthetic Aperture Radar Interferometry technology, in a short period of time (less than six months) for a very broad coverage area (ex: entire territory of a State), and its fusion with other types of data acquired by remote sensors, notably high resolution optical images, multi-spectral and hyper-spectral images. In the first stage of the method, the conversion from analog to digital format of any pre-existent data that stays inside the monitored areas is made, in accordance with the WGS84 Implementation Manual (WGS84) from EUROCONTROL. In the second stage, a raster model is built and compared with the new Digital Surface Model (DSM), obtained by interferometric processing of remote data acquired by Synthetic Aperture Radars positioned in spaceborne platforms, identifying new obstructions and declaring them in an update Airport Obstruction Chart, after applying a Land Change Detection protocol. The latter DSMs obtained after the initial DSM are built using a data fusion between the data obtained from interferometric processing of Synthetic Aperture Radars positioned in spaceborne platforms and other types of data that will be considered useful for the purpose. After building this precise Digital Surface Model (DSM), it will be integrated into an Automated Land Change Detection protocol to update and broadcast these AOC's, in digital format, in a short period of time (a month or less as required). This process will also permit the collection and constant update of sets of electronic terrain and obstacle data covering the 4 territorial areas as specified in ICAO's Annex 15, Chapter 10, which are necessary to accommodate air navigation cockpit or ground based systems or functions.

This innovative idea is based on the use of spaceborne Synthetic Aperture Radar Interferometry using sensors positioned in spaceborne platforms, instead of the use of Airborne Laser-Scanning/ and Light Detection and Ranging sensors ALS/LiDAR, the latter being known as the actual state-of-the-art technology used in this type of application, as the technique for terrain and obstacle data acquisition known as «obstructions» according to ICAO's Aeronautical International Standards and Recommended Practices. The set of acquired terrain and obstacle data that is considered as obstructions, need to be declared in AOC's, in a strictly compliance with the requirements stated in ICAO's Annex 15, Chapter 10, electronic Terrain and Obstacle Data. The monitoring of large areas is considered unfeasible when trying to execute the surveys in a short period of time (less than six months) using the actual state-of-the-art technology (ex: for Area 1, the entire territory of a State needs to be surveyed), taking into account the collection of all the required aeronautical information included in the same coverage area.

Thus, the proposed invention presents, shortly, the following advantages:
- It reduces, sharply, the time spend to acquire terrain and obstacle data;
- It reduces the production time of a new Airport Obstruction Chart (AOC);
- It reduces the updating time of an existent Airport Obstruction Chart (AOC);
- It avoids the suspension of the airfield operations during remote acquisition of terrain and obstacle data;
- It fulfills the numerical requirements for terrain and obstacle data related with the surveying Areas 1 and 2, stated in ICAO's Annex 15, Chapter 10, (eTOD);
- It enables the terrain and obstacle data acquisition under any atmospheric conditions;
- It reduces the complexity of the Airport Obstruction Charts (AOC) producing chain/updating;
- It enables the acquisition of data to be used for applications related to the air navigation, according to the listing given in ICAO's Annex 15, Chapter 10, paragraph 10.1.

### Short description of the drawings

This description is made regarding the drawings in attachment, which represent without any limitation:
- Figure 1, a diagram of the conversion of pre-existent data;
- Figure 2, a diagram of the land change detection;
- Figure 3, a, b, c, d and e showing typical raster models and the necessary overlaid process.

### Detailed description

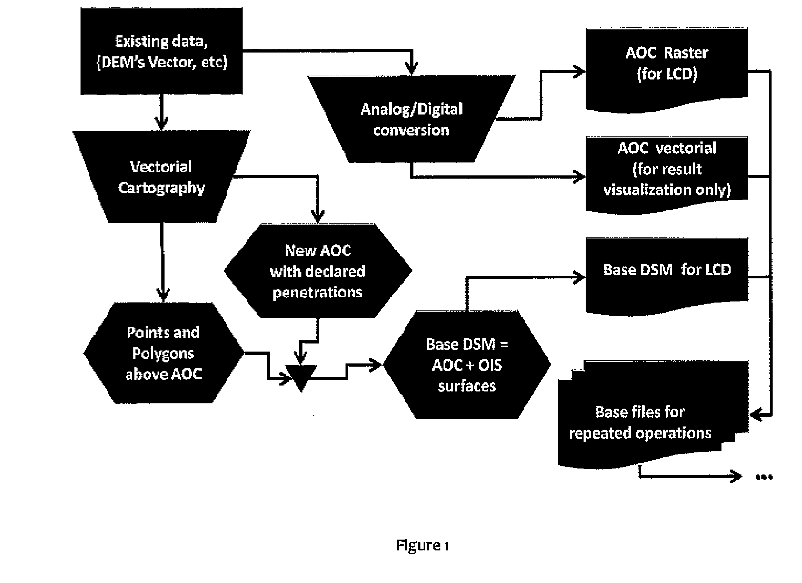

As can be seen in Figure 1, the data in analog format are converted to digital format, by digitizing points, lines and polygons and assuring that any existing images are converted to raster format (example: ortho-rectified imagery, among other types of images). However, the data elements that may already exist in digital format need to be analyzed, because they generally correspond to specific data acquired over a certain period of time, becoming necessary to build a global data structure associated with the area to be monitored. Either in the case of digitized analog data, or in the analysis of data already in digital format, all the combined information composes a Digital Surface Model (DSM) as the data structure to input in the Land Change Detection algorithm in raster format. All these data files are related to the initial epoch of the Digital Surface Model (T₀) and are used for comparison with new data acquired in a new epoch (T₀₊₁ or the following epochs). Based on previous conversion process, a vector file is obtained (Vectorial Airport Obstruction Chart) only for overlaid purposes of the results, using the base Digital Surface Model (DSM) to detect land changes in Raster format.

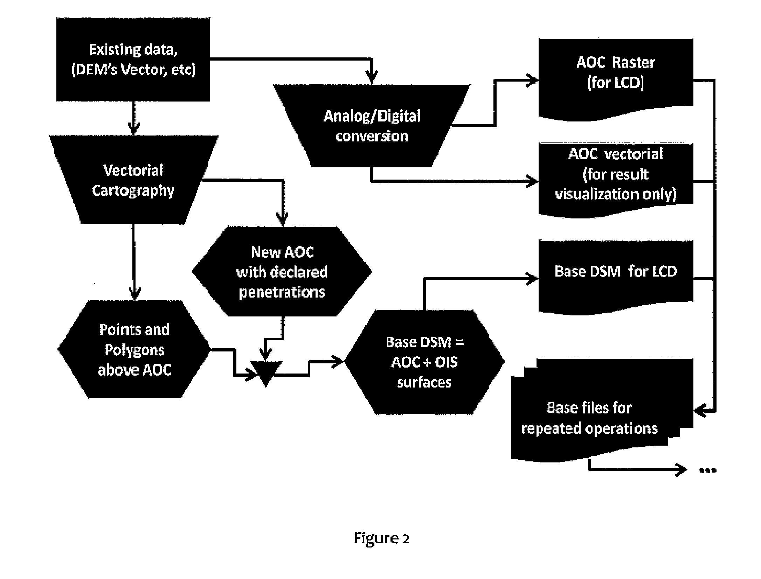

This base Digital Surface Model (DSM) is compared with a structure of altimetric information derived from Interferometric data collected by synthetic aperture radar sensors positioned in space borne platforms (see Figure 2). Later, after co-registering and geo-referencing all the analyzed data properly, the images should be clipped in order to ensure that the entire area being monitored is correctly identified (image cropping for the area being monitored).

In general, the raster data acquired in epochs To and T₀₊₁ (or following epochs) may present a slight horizontal offset (at sub-pixel level) and different spatial resolutions. In order to obtain the best results when applying the Land Change Detection Protocol, it should be ensured that both raster models being compared must have same number of pixels in row and column, representing the same area being monitored (a step so called re-sampling).

After applying the re-sampling step, the Land Change Detection step is activated, comparing elevations (or altitudes) in both digital surface models (from different epochs). The result of the arithmetic difference between both models, within a certain threshold, will produce a third raster model, in which the digital number associated to each pixel of the model represents the absence of penetration, or the identification of a new penetration of the obstruction surface, as well its amount above the three-dimensional obstruction surface of the airport being analyzed. The raster image of the objects that are considered obstructions is subsequently overlaid with the Airport Obstruction Chart in vector format, as mentioned earlier.

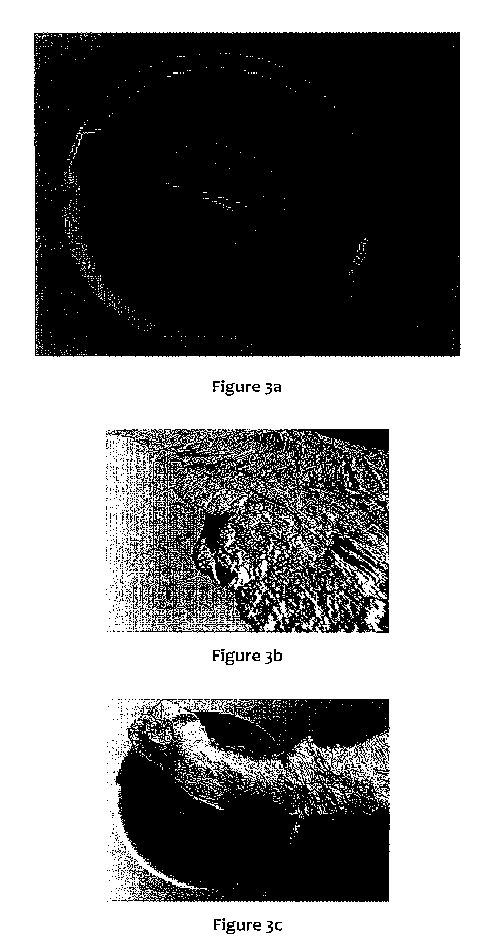

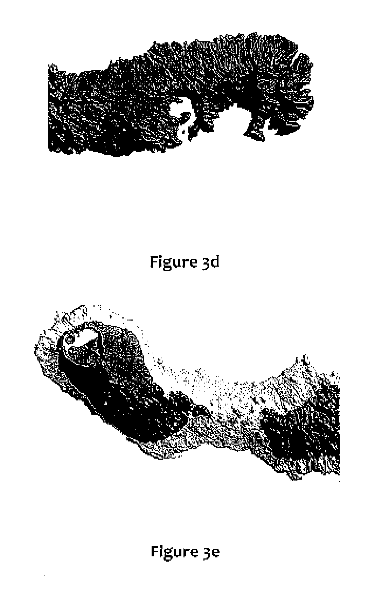

After this overlay, new obstructions are also validated. If they represent new obstructions between the T₀ and T₀₊₁ epochs (or following), this validation can even be obtained simply by a visual check (or confirmed through further data fusion techniques for comparison between the two seasons). For example, if there is a new penetration caused by a new building, this information must be updated and declared in the AOC. But if for any reason such occurrence does not correspond to a new obstruction, information referring to the pixels in focus must be maintained in the epoch To and evaluated in order to understand why there was such indication of obstruction in the Land Change Detection Protocol. In order to identify obstructions (its locations and heights), an overlay procedure is applied to the following geo-referenced data:
- A three-dimensional Surface built to the mandatory monitored areas, according to the existing information in the ICAO's, Annex 4, Annex 14, and Annex 15 and related to the aeronautical infrastructure (see example at the top of Figure 3);
- A three-dimensional Surface obtained by merging both DSMs (the previous and the new one) and other stereoscopic imagery like PRISM-ALOS (Panchromatic Remote-Sensing Instrument for Stereo Mapping - Advanced Land Observing Satellite) or SPOT-5 (multi-pass), if necessary.

Finally, with the new AOC data of the epoch T₀₊₁ fully validated all the obstruction data may be broadcasted to the necessary entities.

The expected experimental results are very close to the requirements presented in ICAO's 15Annex, i.e. between 10 meters and 3 meters in terms of vertical accuracy (probably closer to the lowest value, which is 3 meters, defined as the maximum vertical precision being achieved with this proposal, in compliance with the most demanding requirements presented in ICAO's Annex 15, Chapter 10 - eTOD - for Area 2). A trade-off between the time required to perform a single data update operation (expected along a week) and the precision guaranteed by this process, will be one of the assumptions of the proposal. This implies a greater progress related to the security issues associated with airport operations (free from interruptions/suspensions and getting data from obstructions closer to the ground reality). Even if only 5 meters of vertical accuracy have been achieved, this proposal will also be an important advantage when compared with any current procedure, due to the increase in safety of airport operations, since the database of obstructions declared in AOCs is updated in a very short period of time.

An improvement in quality of the Digital Surface Model (DSM) is obtained by interferometric process of Synthetic Aperture Radars positioned in space borne platforms, using the invention described earlier for aeronautical purposes. There are two distinct areas related to the data requirements of terrain and obstacles (in accordance with ICAO's Annexes 14 and 15), identified as Area 1 and Area 2 (geometrically characterized in ICAO's Annex 15). For Area 1, 30 meters of numeric vertical precision for obstacles is the numerical requirement. For the case of Area 2, 3 meters of numeric vertical precision for obstacles is the stated numerical requirement. The value of precision indicated for Area 2 presents itself as somehow ambitious, taking into account the well-known estimated accuracies achieved when using data collected by spaceborne SAR sensors. However, 3 meters of vertical accuracy is one of the objectives to be achieved by the invention, also respecting a confidence level of 90% of the obstacle data that penetrates the obstruction surfaces concerning Areas 1 and 2, for its appropriate identification on each of these areas, according to indications in ICAO's Annex 15.

For the case of the remaining areas listed in the ICAO' s, Annex 15, notably Area 3 and Area 4, although the results of the invention do not attain the level of confidence required regarding the absolute vertical accuracy needed in accordance with ICAO's Annex 15, the invention can also be implemented for those areas, since an higher vertical relative precision (vertical millimeter precision) is obtained when data from spaceborne SAR sensors are analyzed along different sequential epochs.

## Claims

1. Method to generate Airport Obstruction Charts of monitored areas based on a data fusion of Synthetic Aperture Radar from space-borne platforms with high resolution optical images, multi-spectral OR hyper-spectral images, obtained by remote sensors,
**characterized by** the following steps:
A: Building a base Digital Surface Model (DSM) in raster format with altimetric and spatial resolution:
A1: Taking pre-existing analogue and digital images of the monitored areas;
A2: Conversion of said pre-existing analogue images to digital format;
A3: assuring that said images are converted to raster format;
A4: Vectorization of said pre-existing images to generate a vectorial Airport Obstruction Chart;
B: Detect land changes:
B1: Taking new data, in raster format, acquired later in time being altimetric information, derived from interferometric data obtained by synthetic aperture radar sensors from space-borne platforms;
B2: Co-registration and geo-referencing of said new data;
B3: Image cropping of said new data to ensure that the entire area to be monitored is properly identified;
B4: Re-sampling of said pre-existing images and said new data, so that they present the same number of pixels in row and column, representing the same monitored area;
B5: Comparison of the base digital surface model with altimetric information, derived from interferometric data obtained by synthetic aperture radar sensors from space-borne platforms;
B6: Detection of land changes in said comparison, in order to produce a third raster model;
C: Updating the Airport Obstruction Chart:
C1: Overlay of said third raster model and said vectorial Airport Obstruction Chart;
C2: Identifying an Obstruction Surface (OBS) through the comparison of models obtained in consecutive epochs of monitoring (t0, t1,...,tn);
C3: Validation of new obstructions;
C4: Updating an Airport Obstruction Chart based in said validated new obstructions; and
C5: Broadcasting of said updating Airport Obstruction Chart to the competent authorities.

2. Method to generate Airport Obstruction Charts according to claim 1, **characterized by** the ortho-rectification of the images.

3. Method to generate Airport Obstruction Charts according to any of the previous claims, **characterized by** said third raster model being the result of the altimetric differences between previous models, where the digital number associated with each pixel, Digital Number = Height represented by the highest point of the pixel covered area, of this third model represents the absence of penetration, or the identification of a new penetration in the obstruction surface, as well as its amount above the three-dimensional obstruction surface of an airport being analyzed.

4. Method to generate Airport Obstruction Charts according to any of the previous claims, **characterized by** the validation of new obstructions between the initial (T₀) and later (T₀₊₁) epochs, being accomplished by visual verification or checking by other complementary data fusion techniques, for comparison between two epochs.

5. Method to generate Airport Obstruction according to any of the previous claims, **characterized by**, identifying obstructions, their locations and heights obtained by an overlay procedure with the following geo-referenced data:
- A three-dimensional Surface obtained by merging both digital surface models (DSMs), the previous and the new one, and stereoscopic images, originating from Panchromatic Remote-Sensing Instrument for Stereo Mapping - Advanced Land Observing Satellite, PRISM-ALOS, or multi-pass SPOT-5.

6. Method to generate Airport Obstruction Charts according to any of the previous claims, **characterized by** a vertical accuracy between 10 and 3 meters.

## Patentansprüche

1. Eine Methode zur Schaffung von Flughafen-Hindernis-Karten für überwachte Bereiche auf der Basis der Vereinigung von Daten aus Radar mit synthetischer Apertur aus Satellitenplattformen mit hoch aufgelösten optischen Bildern, multi-spektralen oder hyper-spektralen Bildern, die durch Fernerkundung erhalten werden, **gekennzeichnet durch** die folgenden Schritte:
A: Aufbau eines grundlegenden digitalen Oberflächenmodells (Digital Surface Model, DSM) in Rasterformat mit altimetrischer und räumlicher Auflösung:
A1: unter Verwendung bereits vorhandener analoger oder digitaler Bilder der überwachten Gebiete;
A2: Umwandlung der erwähnten bereits vorliegenden analogen Bilder in digitales Format;
A3: unter Sicherstellung, dass die erwähnten Bilder in Rasterformat umgewandelt werden;
A4: Vektorisierung der erwähnten, bereits vorliegenden Bilder zur Schaffung einer vektoriellen Flughafen-Kindernis-Karte;
B: Feststellung von Gelände-Änderungen
B1: **durch** Aufnahme neuer Daten in Rasterformat, die nachträglich erworben wurden und altimetrische Information darstellen, die von interferometrischen Daten abgeleitet sind, die mittels Radar mit synthetischer Apertur **durch** satelliten-basierte Radarsensoren gewonnen wurde;
B2: Co-Registrierung und Georeferenz der erwähnten neuen Daten;
B3: Zuschneiden von Bildern innerhalb der erwähnten neuen Daten, um zu gewährleisten, dass das gesamte zu überwachende Gebiet richtig erkannt wird;
B4: **Durch** Resampling (Neuabtastung) der erwähnten, bereits vorliegenden Bilder und der erwähnten neuen Daten, so dass sie dieselbe Anzahl von Pixeln pro Reihe und Spalte darstellen, um denselben überwachten Bereich abzubilden;
B5: Vergleich des grundlegenden digitalen Oberflächenmodells mit altimetrischer Information, die aus interferometrischen Daten abgeleitet wurde, die **durch** satelliten-basierte Sensoren für Radar mit synthetischer Apertur erhalten wurden;
B6: Feststellung von Gelände-Änderungen im erwähnten Vergleich, um ein drittes Rastermodell herzustellen;
C: Aktualisierung der Flughafen-Hindernis-Karte:
C1: Überlagerung des erwähnten dritten Rastermodells und der erwähnten vektoriellen Flughafen-Hindernis-Karte;
C2: Auffinden einer Behinderungs-Oberfläche (Obstruction Surface, OBS) **durch** den Vergleich von Modellen, die in aufeinander folgenden Epochen der Überwachung (t0, t1,..., tn) erhalten wurden;
C3: Bewertung neuer Belegungen;
C4: Aktualisierung einer Fluhafen-Hindernis-Karte auf der Grundlage der erwähnten bewerteten neuen Belegungen; und
C5: Übertragung der erwähnten, sich aktualisierenden Fluhafen-Belegungskarte an die zuständigen Behörden.

2. Methode zur Erstellung von Flughafen-Hindernis-Karten nach Patentanspruch 1, **gekennzeichnet durch** die Ortho-Rektifizierung der Bilder.

3. Methode zur Erstellung von Flughafen-Hindernis-Karten nach allen vorhergehenden Patentansprüchen, **dadurch gekennzeichnet, dass** das genannte dritte Rastermodell das Ergebnis der altimetrischen Unterschiede der vorhergehende Modelle ist, wobei die mit jedem Pixel assoziierte digitale Zahl, die digitale Zahl - Höhe, die durch den höchsten Punkt der durch Pixel abgedeckten Fläche repräsentiert wird, in diesem dritten Modell die Abwesenheit einer Einbringung darstellt, oder die Feststellung eines neuen Eindringens in die Behinderungs-Oberfläche, beziehungsweise ihr Betrag über der dreidimenisonalen Oberfläche eines untersuchten Flughafens.

4. Methode zur Erstellung von Flughafen-Hindernis-Karten nach allen vorhergehenden Patentansprüchen, **dadurch gekennzeichnet dass**, die Bewertung neuer Hindernisse zwischen der anfänglichen (T₀) und späteren (T₀₊₁) Epochen durch visuelle Verifikation oder Überprüfung mit anderen ergänzenden Datenfusionstechniken für den Vergleich zwischen zwei Epochen vorgenommen wird.

5. Methode zur Erstellung von Flughafen-Hindernis-Karten nach allen vorhergehenden Patentansprüchen, **gekennzeichnet durch** das Erkennen von Behinderungen, deren Orte und Höhen, das durch eine Überlagerungsprozedur mit den folgenden Georeferenz-Daten erhalten wird:
eine dreidimenisonal Oberfläche die **durch** Verflechtung beider digitaler Oberflächenmodelle (digital surface models, DSMs) erhalten wirt, des vorhergehenden und des neuen, die stammen vom panchromatischen Fernerkundungs-Instrument für Stereo-Kartierung - fortgeschrittenem Landbeobachtungasatelliten, PRISM-ALOS oder multi-pass SPOT-5.

6. Methode zur Erstellung von Flughafen-Hindernis-Karten nach allen vorhergehenden Patentansprüchen, **gekennzeichnet durch** ein vertikale Genauigkeit zwischen 10 und 3 Metern.

## Revendications

1. Méthode pour la génération de Cartes d'Obstacles d'Aéroport basée sur une fusion de données de radars à synthèse d'ouverture positionnés sur des plateformes spatiales avec des images de haute résolution optiques, multispectrales ou hyperspectrales, captées par des détecteurs à distance, **caractérisée par** les étapes suivantes :
A : Construction d'un Modèle Numérique de Surface (MNS) de base en format raster avec une résolution altimétrique et spatiale :
A1 :
Obtention d'images analogiques et numériques préexistantes des zones surveillées ;
A2 :
Conversion desdites images analogiques préexistantes au format numérique ;
A3 :
Assurer que lesdites images sont converties au format raster ;
A4 :
Vectorisation desdites images préexistantes afin de générer une Carte d'Obstacles d'Aéroport ;
B : Détection d'altérations du terrain :
B1 :
Obtention de nouvelles données, en format raster, acquises dans une époque postérieure, étant des données altimétriques, dérivées de données interférométriques captées par des radars à synthèse d'ouverture sur des plateformes spatiales ;
B2 :
Co-enregistrement et géoréférencement desdites nouvelles données
B3 :
Découpe des images des nouvelles données pour garantir que toute la zone à surveiller est correctement identifiée ;
B4 :
Ré-échantillonnage desdites images préexistantes et desdites nouvelles données afin de présenter le même nombre de pixels en ligne et en colonne, représentant la même zone surveillée
B5 :
Comparaison entre le modèle numérique de surface de base et les données altimétriques dérivées de données interférométriques captées par des radars à synthèse d'ouverture sur des plateformes spatia-es ;
B6 :
Détection d'altérations du terrain dans ladite comparaison afin de produire un troisième modèle raster ;
C : Actualisation de la Carte d'Obstacles d'Aéroport :
C1 :
Superposition dudit troisième modèle raster et de la Carte d'Obstacles d'Aéroport en format vectoriel ;
C2 :
Identification d'une surface d'obstruction (OBS) par comparaison des modèles obtenus dans des époques de surveillance consécutives (t0, t1, ..., tn) ;
C3 :
Validation de nouvelles obstruction ;
C4 :
Actualisation d'une Carte d'Obstacles d'Aéroport sur la base desdites nouvelles obstructions validées ; et
C5 :
Diffusion de ladite Carte d'Obstacles d'Aéroport actualisée aux autorités compétentes.

2. Méthode pour la génération de Cartes d'Obstacles d'Aéroport selon la revendication 1, **caractérisée par** l'ortho-rectification des images.

3. Méthode pour la génération de Cartes d'Obstacles d'Aéroport selon l'une quelconque des revendications précédentes, **caractérisée par le fait que** ledit troisième modèle raster résulte des différences altimétriques par rapport aux modèles antérieurs, où le numéro numérique associé à chaque pixel, Numéro Numérique = Hauteur représentée par le point le plus élevé de la zone pixellisée, de ce troisième modèle représente l'absence de pénétration ou l'identification d'une nouvelle pénétration dans la surface d'obstruction, ainsi que sa dimension en-dessous de la surface tridimensionnelle d'obstruction d'un aéroport faisant l'objet d'une analyse.

4. Méthode pour la génération de Cartes d'Obstacles d'Aéroport selon l'une quelconque des revendications précédentes, **caractérisée par le fait que** la validation de nouvelles obstructions entre l'époque initiale (T₀) et l'époque postérieure (T₀₊₁) se réalise par une vérification visuelle ou une inspection par d'autres techniques complémentaires de fusion de données, pour une comparaison entre deux époques.

5. Méthode pour la génération de Cartes d'Obstacles d'Aéroport selon l'une quelconque des revendications précédentes, **caractérisée par le fait que** dans l'identification d'obstructions, leur localisation et leur hauteur sont obtenues par une procédure de superposition avec les données géoréférencées suivantes :
- Une surface tridimensionnelle obtenue par la fusion des deux modèles numériques de surface (MNS), le précédent et l'actuel, et les images stéréoscopiques obtenues par imageur stéréoscopique à distance panchromatique - satellite avancé d'observation des sols (PRISM-ALOS) ou SPOT-5 (multi-passe).

6. Méthode pour la génération de Cartes d'Obstacles d'Aéroport selon l'une quelconque des revendications précédentes, **caractérisée par** une précision verticale d'entre 10 et 3 mètres.
